# EUROPÄISCHE PATENTSCHRIFT

(11) **EP 0 779 443 B1**
(45) Veröffentlichungstag und Bekanntmachung des Hinweises auf die Patenterteilung: **29.03.2000**
(21) Anmeldenummer: 96118561.8
(22) Anmeldetag: 20.11.1996
(51) Int. Cl.: F16C 33/76, F16C 35/04

(54) **Lagergehäuse mit einer Schutzkappe**
Bearing housing with protective cap
Corps de palier avec capuchon protecteur

(30) Priorität: 15.12.1995 DE 19546676
(43) Veröffentlichungstag der Anmeldung: 18.06.1997
(73) Patentinhaber: INA Wälzlager Schaeffler oHG, 91072 Herzogenaurach (DE)
(72) Erfinder: Fischer, Arnold, 66909 Steinbach (DE); Kröber, Erich, 66909 Krottelbach (DE)

(56) Entgegenhaltungen:
- DE-A- 2 632 990
- DE-A- 3 025 231
- FR-A- 1 562 729
- FR-A- 2 386 723

## Beschreibung

### Gebiet der Erfindung

Die Erfindung betrifft ein Lagergehäuse zur formschlüssigen Aufnahme des äußeren Laufringes eines Wälzlagers, mit einer das Lagergehäuse stirnseitig verschließenden Schutzkappe, deren Mantel mindestens zwei nach außen abstehende, in Abständen voneinander angeordnete Haltevorsprünge aufweist, mit welchen die Schutzkappe in dem Lagergehäuse gehalten ist und die in stirnseitige Einführtaschen des Lagergehäuses axial einsteckbar sind.

### Hintergrund der Erfindung

Ein Lagergehäuse mit einem äußeren Laufring und einer Schutzkappe ist beispielsweise aus der DE-OS 27 15 416 bekannt. Die Kappe weist einen umlaufenden Rand auf. Mit diesem greift sie in eine innere Umfangsnut des Laufringes ein. Eine Montage der aus Kunststoff bestehenden Schutzkappe ist hier nur durch deren starke Verformung möglich, um den umlaufenden Rand in die Bohrung des Lagerringes einführen zu können, bevor dieser in die Umfangsnut gelangt.

Die DE-OS 30 25 231 zeigt ein Lagergehäuse mit einem äußeren Laufring und einer metallischen Schutzkappe, welche an dem Laufring dadurch lösbar befestigt ist, daß zwei diametral gegenüberliegende Lippen der Schutzkappe in eine äußere Umfangsnut des Laufringes eingreifen. Die Lippen gehen von federnd verformbaren Ansätzen der Schutzkappe aus und sind radial einwärts gerichtet. Zum Ablösen der Schutzkappe von dem Lagerring muß die Kappe durch Ausübung von Druck auf ihre Mantelfläche so verformt werden, daß die Ansätze sich radial nach außen bewegen, so daß die Lippen aus der Umfangsnut des Lagerringes herausgelangen.

Aus dem DE-GM 19 89 633 ist ein Lagergehäuse der eingangs genannten Art bekannt. Dieses weist eine Schutzkappe auf, welche mit ihren beiden diametral gegenüberliegenden Haltevorsprüngen in den Einführtaschen durch federnde Anlage an deren Begrenzungsflächen gehalten ist. Dabei verlaufen die Haltevorsprünge als Verlängerungen des konischen Kappenmantels nahezu axial. Die Montage dieser Kappe an dem Lagergehäuse ist durch Einstecken der Haltevorsprünge in die Einführtaschen zwar denkbar einfach, die Kappe kann aber ebenso leicht, auch unbeabsichtigt beispielsweise durch Verkippen, von dem Lagergehäuse wieder abgelöst werden.

### Zusammenfassung der Erfindung

Der Erfindung liegt die Aufgabe zugrunde, das Lagergehäuse so weiterzubilden, daß stets eine sichere Befestigung der Abdeckkappe in dem Lagergehäuse gewährleistet ist.

Diese Aufgabe wird erfindungsgemäß dadurch gelöst, daß in das Lagergehäuse zur Aufnahme der Haltevorsprünge bei Verdrehung der Schutzkappe eine umlaufende Ringnut eingearbeitet ist, welche in Umfangsrichtung des Laufringes mit den Einführtaschen verbunden ist. Vor der Schutzkappenmontage ist das Lager bereits auf der Welle und in dem Lagergehäuse montiert. Das Gehäuse ist an einem Maschinenteil angeschraubt. Die erfindungsgemäße Anordnung ermöglicht es nun, die Schutzkappe mit den Haltevorsprüngen in die Einführtaschen hineinzustecken, dort zu halten und anschließend um 90° um die Lager- und Schutzkappenachse zu verdrehen. Dabei bewegen sich die Haltevorsprünge in der Ringnut in Umfangsrichtung, bis die Haltekappe dort festgeklemmt ist. Die Klemmung wird durch die Form der Haltevorsprünge erreicht. Im Bereich der Haltevorsprünge wird die Schutzkappe radial leicht oval gedrückt. Sie stützt sich dann über die Oberflächen der Haltevorsprünge in der Ringnut ab, wobei die Haltevorsprünge die Klemmkraft erzeugen.

An der Schutzkappe können zwei diametral gegenüberliegende Haltevorsprünge angeordnet sein. Die Schutzkappe kann in den Bereichen der Haltevorsprünge mit ihrer durch den inneren Durchmesser bestimmten stirnseitigen Kante an der äußeren Oberfläche des Laufringes abgestützt sein. Durch diese Anordnung können die Haltevorsprünge in Richtung der Wellenachse größere Haltekräfte aufnehmen.

Die Schutzkappe kann aus einem Kunststoff bestehen, während das Lagergehäuse ein Stahlgußteil sein kann, in welchem die Einführtaschen beim Gießen eingeformt sind. Die Ringnut kann durch spanende Formgebung in das Lagergehäuse eingebracht sein. Der äußere Laufring kann mit einer kugelabschnittförmigen äußeren Oberfläche an einer entsprechend geformten inneren Oberfläche des Lagergehäuses passend anliegen.

### Kurze Beschreibung der Zeichnungen

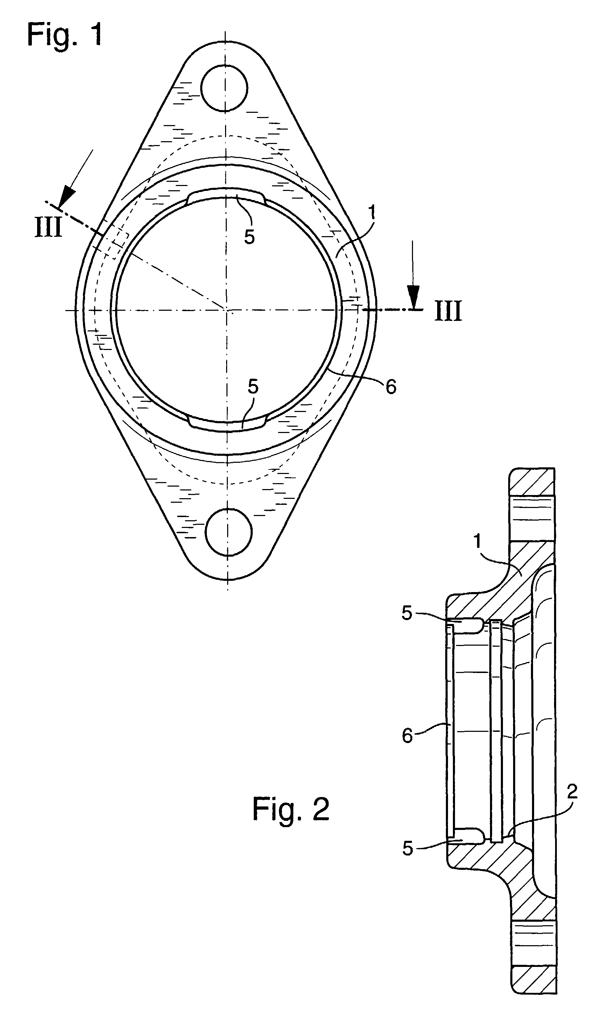

Ausführungsbeispiele der Erfindung sind in den Zeichnungen dargestellt und werden im folgenden näher beschrieben. Es zeigen
- Figur 1: eine stirnseitige Ansicht eines erfindungsgemäßen Lagergehäuses;
- Figur 2: einen Axialschnitt durch das Lagergehäuse;

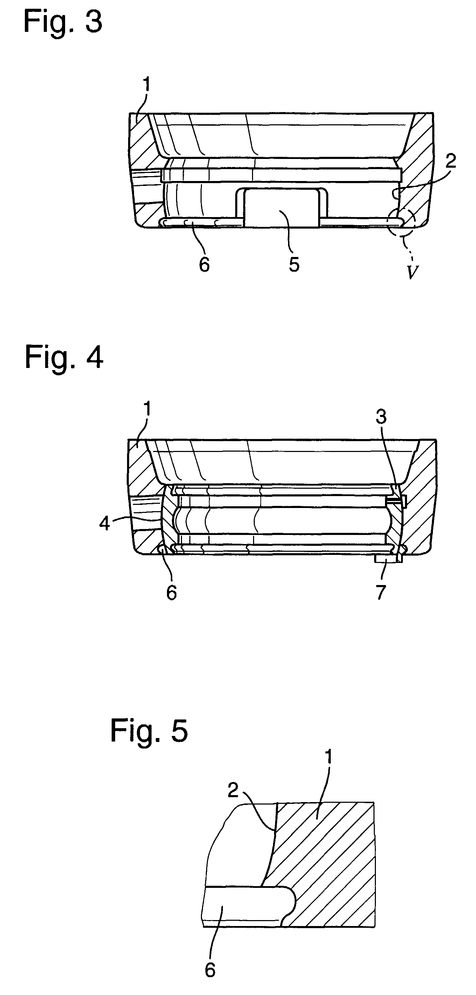

- Figur 3: einen Radialschnitt durch das Lagergehäuse gemäß Linie III-III der Figur 2;
- Figur 4: ein Lagergehäuse gemäß Figur 3 mit einem eingesetzten äußeren Laufring eines Wälzlagers;
- Figur 5: eine vergrößerte Darstellung der Einzelheit V der Figur 3;

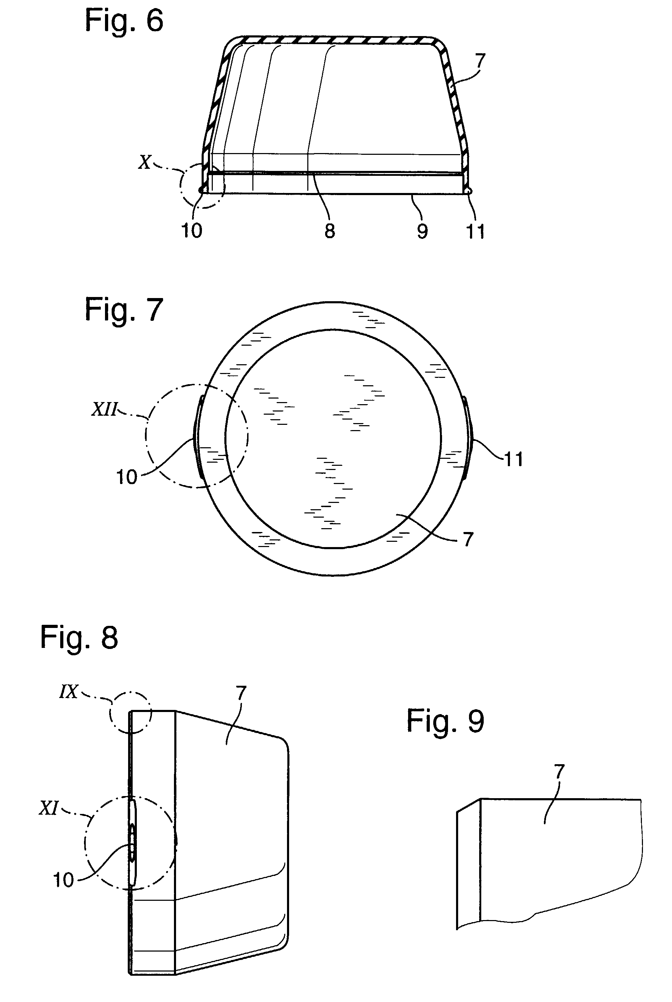

- Figur 6: eine Schutzkappe mit Haltevorsprüngen im Schnitt;
- Figur 7: eine stirnseitige Ansicht der Schutzkappe mit den Haltevorsprüngen;
- Figur 8: eine Seitenansicht der Schutzkappe;
- Figur 9: eine vergrößerte Darstellung der Einzeiheit IX der Figur 8;

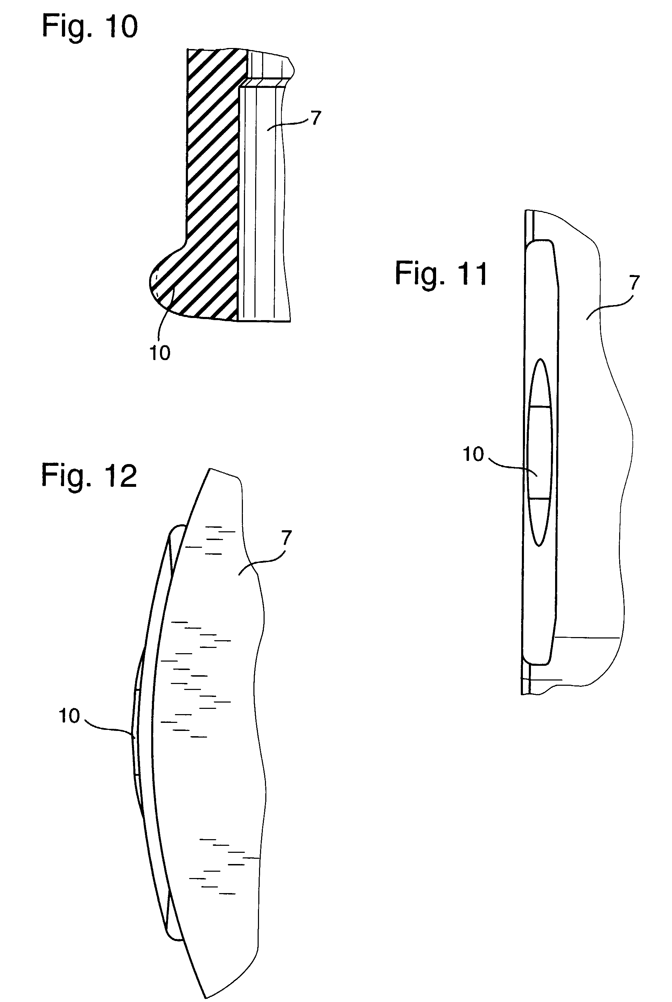

- Figur 10: eine vergrößerte Darstellung der Einzelheit X der Figur 6;
- Figur 11: eine vergrößerte Darstellung der Einzelheit XI der Figur 8;
- Figur 12: eine vergrößerte Darstellung der Einzelheit XII der Figur 7;

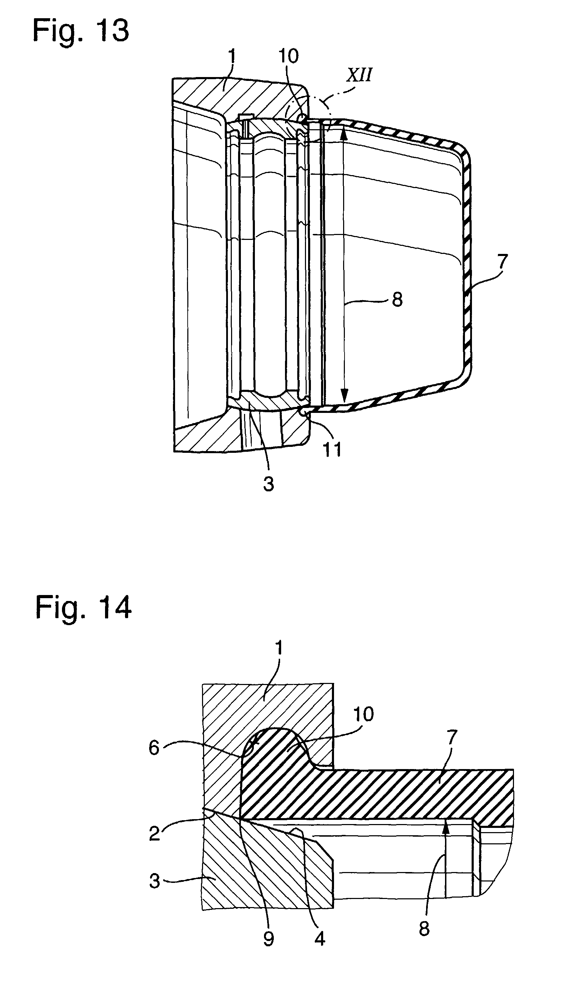

- Figur 13: einen Längsschnitt durch ein Lagergehäuse mit einem Laufring und einer Schutzkappe;
- Figur 14: eine vergrößerte Darstellung der Einzelheit XIV der Figur 13.

### Ausführliche Beschreibung der Zeichnungen

Ein erfindungsgemäßes Lagergehäuse 1 ist als Stahlgußteil ausgeführt und weist eine kugelabschnittförmige innere Oberfläche 2 auf, an welcher ein äußerer Laufring 3 eines Wälzlagers mit einer kugelabschnittförmigen äußeren Oberfläche 4 passend anliegt. In das Lagergehäuse 1 sind zwei Einführtaschen 5, die diametral gegenüberliegen, eingegossen. Anschließend ist in das Lagergehäuse 1 eine Ringnut 6 durch Drehen spanend eingearbeitet worden. Sie verläuft in Umfangsrichtung des Lagergehäuses 1 und geht von dessen innerer Oberfläche 2 aus. Durch die beiden von einer Stirnseite ausgehenden Einführtaschen 5 wird die Ringnut 6 unterbrochen, so daß die Räume der Einführtaschen 5 und der Ringnut 6 miteinander verbunden sind.

Das Lagergehäuse 1 ist an einer Stirnseite mit einer Schutzkappe 7 verschlossen, die eine leicht konische Form aufweist und an ihrer offenen Seite mit einem inneren Durchmesser 8 in einen kreiszylindrischen Bereich übergeht. Im Bereich der von dem Durchmesser 8 bestimmten stirnseitigen Kante 9 weist die Schutzkappe 7 zwei diametral gegenüberliegende Haltevorsprünge 10 und 11 auf, die an der äußeren Oberfläche der Schutzkappe 7 radial nach außen abstehen.

Die Montage der Schutzkappe 7 an dem Lagergehäuse 1 erfolgt in sehr einfacher Weise. Die Schutzkappe 7 wird mit ihrer offenen Stirnseite voran in Richtung ihrer Achse sowie der Achse des Lagergehäuses 1 und des äußeren Laufringes 3 zum Lagergehäuse 1 bewegt, wobei die Haltevorsprünge 10 und 11 mit den Einführtaschen 5 fluchten müssen. Nach dem Einsetzen der Haltevorsprünge 10 und 11 in die Einführtaschen 5 wird die Schutzkappe 7 um 90° um ihre Achse verdreht. Dabei gelangen die Haltevorsprünge 10 und 11 der Schutzkappe 7 in die Ringnut 6 des Lagergehäuses 1. Die Ringnut 6 und die Haltevorsprünge 10 und 11 haben nun eine solche Form, daß am Ende der Verdrehung der Schutzkappen 7 um die Schutzkappenachse eine Verklemmung der Haltevorsprünge 10 und 11 innerhalb der Ringnut 6 erfolgt ist. Dabei hat die Schutzkappe 7 im Bereich der Haltevorsprünge 10 und 11 ihre kreiszylindrische Form aufgegeben und eine leicht oval gedrückte Form angenommen. Da sich nach dieser Montage die stirnseitige Kante 9 der Schutzkappe 7 an der kugelabschnittförmigen äußeren Oberfläche 4 des äußeren Laufringes 3 abstützt, ist ein axiales Herausziehen der Schutzkappe 7 aus dem Lagergehäuse 1 oder ein Entfernen der Schutzkappe von dort durch deren Verkippung nicht möglich. Das erfindungsgemäße Lagergehäuse 1 gewährleistet daher einen festen und sicheren Sitz der Schutzkappe 7.

### Bezugszahlenliste

- 1: Lagergehäuse
- 2: kugelabschnittförmige innere Oberfläche
- 3: äußerer Laufring
- 4: kugelabschnittförmige äußere Oberfläche
- 5: Einführtasche
- 6: Ringnut
- 7: Schutzkappe
- 8: innerer Durchmesser
- 9: stirnseitige Kante
- 10: Haltevorsprung
- 11: Haltevorsprung

## Patentansprüche

1. Lagergehäuse zur formschlüssigen Aufnahme des äußeren Laufringes eines Wälzlagers, mit einer das Lagergehäuse stirnseitig verschließenden Schutzkappe, deren Mantel mindestens zwei nach außen abstehende, in Abständen voneinander angeordnete Haltevorsprünge aufweist, mit welchen die Schutzkappe in dem Lagergehäuse gehalten ist und die in stirnseitige Einführtaschen des Lagergehäuses axial einsteckbar sind, **dadurch gekennzeichnet**, daß zur Aufnahme der Haltevorsprünge (10, 11) bei Verdrehung der Schutzkappe (7) eine umlaufende Ringnut (6) in das Lagergehäuse (1) eingearbeitet ist, welche in Umfangsrichtung des Laufringes (3) mit den Einführtaschen (5) verbunden ist.

2. Lagergehäuse nach Anspruch 1, **dadurch gekennzeichnet,** daß an der Schutzkappe (7) zwei diametral gegenüberliegende Haltevorsprünge (10, 11) angeordnet sind.

3. Lagergehäuse nach Anspruch 1, **dadurch gekennzeichnet,** daß die Schutzkappe (7) aus einem Kunststoff besteht.

4. Lagergehäuse nach Anspruch 1, **dadurch gekennzeichnet,** daß es ein Stahlgußteil ist, in welchem die Einführtaschen (5) beim Gießen eingeformt sind.

5. Lagergehäuse nach Anspruch 4, **dadurch gekennzeichnet,** daß die Ringnut (6) durch spanende Formgebung in das Lagergehäuse (1) eingebracht ist.

6. Lagergehäuse nach Anspruch 1, **dadurch gekennzeichnet,** daß der äußere Laufring (3) mit einer kugelabschnittförmigen äußeren Oberfläche (4) an einer entsprechend geformten inneren Oberfläche (2) des Lagergehäuses (1) passend anliegt.

7. Lagergehäuse nach Anspruch 1, **dadurch gekennzeichnet,** daß die Schutzkappe (7) in den Bereichen der Haltevorsprünge (10, 11) mit ihrer durch den inneren Durchmesser (8) bestimmten stirnseitigen Kante (9) an der äußeren Oberfläche (4) des Laufringes (3) abgestützt ist.

## Claims

1. Bearing housing for the positive reception of the outer race of a rolling bearing, said bearing housing having a protective cap which closes the bearing housing at one end and whose jacket comprises at least two outwards projecting, spaced retaining projections with which the protective cap is retained in the bearing housing and which can be inserted axially into end insertion pockets of the bearing housing, characterised in that a peripheral annular groove (6) which is connected to the insertion pockets (5) in the peripheral direction of the race (3) is worked into the bearing housing (1) for receiving the retaining projections (10, 11) when the protective cap (7) is turned.

2. Bearing housing according to Claim 1, characterised in that two retaining projections (10, 11) are arranged diametrically opposite each other on the protective cap (7).

3. Bearing housing according to Claim 1, characterised in that the protective cap (7) is made of a plastics material.

4. Bearing housing according to Claim 1, characterised in that it is a steel casting in which the insertion pockets (5) are formed during casting.

5. Bearing housing according to Claim 4, characterised in that the annular groove (6) is made in the bearing housing (1) by machining.

6. Bearing housing according to Claim 1, characterised in that a spherical segment-shaped outer surface (4) of the outer race (3) bears snugly against an appropriately shaped inner surface (2) of the bearing housing (1).

7. Bearing housing according to Claim 6, characterised in that, in the regions of the retaining projections (10, 11), the protective cap (7) is supported with its front edge (9), which is determined by the inner diameter (8), on the outer surface (4) of the race (3).

## Revendications

1. Boîtier de palier pour la réception positive de l'anneau extérieur de roulement d'un palier de roulement, avec un capot de protection qui ferme le boîtier de palier d'un côté frontal et dont la chemise comprend au moins deux saillies de retenue qui font saillie vers l'extérieur et sont écartées l'une de l'autre, lesdites saillies retenant le capot de protection dans le boîtier de palier en étant adaptées à être insérées en direction axiale dans des poches d'insertion frontales du boîtier de palier, **caractérisé en ce qu'**une rainure annulaire (6) périphérique qui est reliée aux poches d'insertion (5) en direction périphérique de l'anneau de roulement (3) est travaillée dans le boîtier de palier (1) pour recevoir les saillies de retenue (10, 11 ) lors d'un mouvement rotatif du capot de protection (7).

2. Boîtier de palier selon la revendication 1, **caractérisé en ce que** deux saillies de retenue (10, 11) diamétralement opposées, l'une à l'autre, sont agencées sur le capot de protection (7).

3. Boîtier de palier selon la revendication 1, **caractérisé en ce que** le capot de protection (7) est fait en matière plastique.

4. Boîtier de palier selon la revendication 1, **caractérisé en ce qu'**il est une pièce en acier moulé avec laquelle les poches d'insertion (5) viennent de moulage.

5. Boîtier de palier selon la revendication 4, **caractérisé en ce que** la rainure annulaire (5) est formée dans le boîtier de palier (1) par enlèvement de copeaux.

6. Boîtier de palier selon la revendication 1, **caractérisé en ce que** l'anneau extérieur de roulement (3) est en contact ajusté par une surface extérieure (4) en forme de segment sphérique avec une surface intérieure (2) de forme appropriée du boîtier de palier (1).

7. Boîtier de palier selon la revendication 1, **caractérisé en ce que**, dans les régions des saillies de retenue (10, 11), le capot de protection (7) est supporté sur la surface extérieure (4) de l'anneau de roulement (3) par son arête frontale (9) qui est déterminée par le diamètre interne (8).
